# EUROPEAN PATENT SPECIFICATION

(11) **EP 2 999 029 B1**
(45) Date of publication and mention of the grant of the patent: **28.10.2020**
(21) Application number: 15181850.7
(22) Date of filing: 20.08.2015
(51) Int. Cl.: H01M 2/26, H01M 10/0585, H01M 10/052

(54) **ELECTRODE ASSEMBLY AND SECONDARY BATTERY INCLUDING THE SAME**
ELEKTRODENANORDNUNG UND SEKUNDÄRBATTERIE DAMIT
ENSEMBLE D'ELECTRODE ET BATTERIE SECONDAIRE EN DISPOSANT

(30) Priority: 17.09.2014 KR 20140123700
(43) Date of publication of application: 23.03.2016
(73) Proprietor: Samsung SDI Co., Ltd., Yongin-si, Gyeonggi-do 17084 (KR)
(72) Inventor: SONG, Hyunhwa, Gyeonggi-do (KR); SUH, Junwon, Gyeonggi-do (KR); YI, Jeong-Doo, Gyeonggi-do (KR); SOHN, Juhee, Gyeonggi-do (KR)
(74) Representative: Taor, Simon Edward William

(56) References cited:
- EP-A1- 1 826 843
- EP-A1- 2 325 929
- EP-A1- 2 363 907
- EP-A1- 2 535 966
- EP-A1- 2 728 647
- WO-A2-2010/030606

## Description

One or more embodiments of the present invention relate to an electrode assembly and a secondary battery including the electrode assembly, and more particularly, to a structure of a secondary battery.

Compact and light-weight portable electric or electronic devices such as cellular phones, laptop computers, or camcorders have recently been actively developed and produced. Thus, a battery back is embedded in the portable electric or electronic devices for operation where there is no power supply. Recently, the battery pack uses a rechargeable secondary battery for economic efficiency. Representative examples of a secondary battery include a nickel-cadmium (Ni-Cd) battery, a nickel-hydrogen (Ni-MH) battery, a lithium (Li) battery, and a lithium-ion (Li-ion) battery. In particular, a Li-ion secondary battery has an operation voltage that is about three times as high as that of a Ni-Cd battery or a Ni-H battery which is frequently used as a power supply of portable electronic equipment. Also, the Li-ion secondary battery is widely used for its high energy density per unit weight. A secondary battery mainly uses a lithium-based oxide as a positive electrode active material and a carbon material as a negative electrode active material.

EP2363907 discloses arrangements for connecting the electrode tabs of a plurality of electrode plates of an electrode assembly together. The tabs are wound together to form a wound portion which is intended to be housed within the housing, and alternatively may be bent in specific ways to form a bent portion. WO2010/030606 further discloses an electrochemical cell including at least one electrode wherein a portion of the at least one electrode is folded onto itself to provide a coupling surface for conductive connection to a terminal of the electrochemical cell.

One or more embodiments of the present invention include an electrode assembly and a structure of a secondary battery including the electrode assembly.

Additional aspects will be set forth in part in the description which follows and, in part, will be apparent from the description, or may be learned by practice of the presented embodiments.

According to an aspect of the invention, there is provided an electrode assembly as set out in claim 1. Preferred features are set out in claims 2 to 6.

According to an aspect of the invention, there is provided a secondary battery as set out in claim 7.

These and/or other aspects will become apparent and more readily appreciated from the following description of the embodiments, taken in conjunction with the accompanying drawings in which:
FIG. 1 is a perspective view of a disassembled secondary battery according to an embodiment of the present invention;
FIG. 2 is a perspective view of a portion of the disassembled secondary battery of FIG. 1;
FIG. 3 is a cross-sectional view of a portion of the secondary battery of FIG. 1 cut along a line III-III'; and
FIG. 4 is a cross-sectional view of a portion of the secondary battery of FIG. 1 cut along a line IV-IV'.

Reference will now be made in detail to embodiments, examples of which are illustrated in the accompanying drawings, wherein like reference numerals refer to like elements throughout, and redundant explanations are omitted. In this regard, the present embodiments may have different forms and should not be construed as being limited to the descriptions set forth herein. Accordingly, the embodiments are merely described below, by referring to the figures, to explain aspects of the present description.

Since the present invention may have various modifications and several embodiments, exemplary embodiments are shown in the drawings and will be described in detail. Advantages, features, and a method of achieving the same will be specified with reference to the embodiments described below in detail together with the attached drawings. However, the embodiments may have different forms and should not be construed as being limited to the descriptions set forth herein.

It will be understood that although the terms "first", "second", etc. may be used herein to describe various components, these components should not be limited by these terms. These components are only used to distinguish one component from another.

Singular expressions, unless defined otherwise in contexts, include plural expressions.

In the embodiments below, it will be further understood that the terms "comprise" and/or "have" used herein specify the presence of stated features or components, but do not preclude the presence or addition of one or more other features or components.

In the embodiments below, it will be understood when a portion such as a layer, an area, or an element is referred to as being "on" or "above" another portion, it can be directly on or above the other portion, or intervening portion may also be present.

In the embodiments below, an x-axis, a y-axis, and a z-axis are not limited to three axes on a rectangular coordinates system but may be construed as including these axes. For example, an-x axis, a y-axis, and a z-axis may be at right angles or not may also indicate different directions from one another, which are not at right angles.

Also, in the drawings, for convenience of description, sizes of elements may be exaggerated or contracted. In other words, since sizes and thicknesses of components in the drawings are arbitrarily illustrated for convenience of explanation, the following embodiments are not limited thereto.

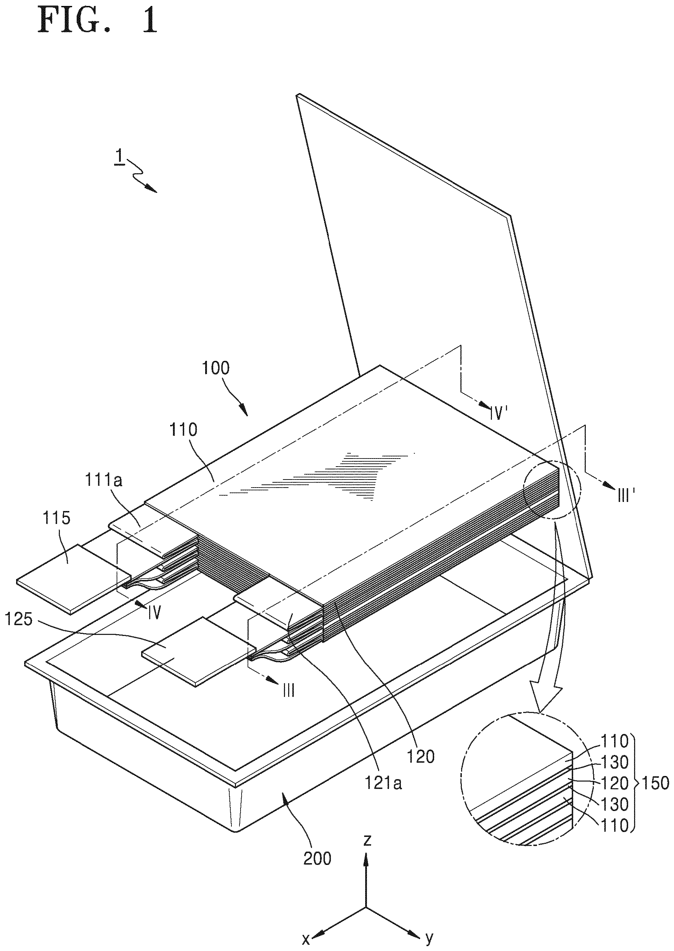

FIG. 1 is a perspective view of a disassembled secondary battery 1 according to an embodiment of the present invention.

Referring to FIG. 1, the secondary battery 1 may include an electrode assembly 100 and a case 200 that accommodates the electrode assembly 100.

The electrode assembly 100 includes the first polar plate 110, the second polar plate 120, and the separator 130 interposed between the first polar plate 110 and the second polar plate 120. The first polar plate 110 and the second polar plate 120 have different polarities. Hereinafter, the first polar plate 110 may be understood as having a positive polarity and the second polar plate 120 may be understood as having a negative polarity that is different from the polarity of the first polar plate 110.

The first polar plate 110 includes a first coating (coated) portion 112 coated with a first active material (not shown) and a first non-coated portion 111a that is not coated with the first active material. The first coating portion 112 is formed by applying a first active material on two surfaces or one surface of a first base layer 111 for coating. The first non-coated portion 111a is a portion that extends from the first base layer 111 and is bent.

The second polar plate 120 includes a second coating (coated) portion 122 coated with a second active material (not shown) and a second uncoated portion 121a that is not coated with the second active material. The second coating portion 122 may be formed by applying a second active material on two surfaces or one surface of a second base layer 121 for coating. The second non-coated portion 121a is a portion that extends from the second base layer 121 and is bent.

The electrode assembly 100 includes a plurality of first polar plates 110 and a plurality of second polar plates 120. The plurality of first polar plates 110 and the plurality of second polar plates 120 are alternately stacked, and the separator 130 may be respectively included between the first polar plates 110 and the second polar plates 120. Each of the plurality of first polar plates 110 includes a first non-coated portion 111a, and the first non-coated portions 111a are bent. Likewise, each of the plurality of second polar plates 120 includes a second non-coated portion 121a, and the second non-coated portions 121a are bent. That is, the electrode assembly 100 may be formed by bending the first non-coated portion 111a of one first polar plate 110 and the second non-coated portion 121a of one second polar plate 120 and alternately stacking the first polar plates 110 and the second polar plates 120 respectively having the first non-coated portions 111a and the second non-coated portions 121a that are bent.

The first non-coated portions 111a may be bent in a 'Z' shape. Also, the second non-coated portions 121a may be bent in a 'Z' shape. The above shapes are ones in which the first non-coated portions 111a and the second non-coated portions 121a have a form that is bent at least twice and ends thereof are separator respectively connected to a first lead tab 115 and a second lead tab 125, and accordingly, empty space corresponding to steps is efficiently filled. However, as long as the first non-coated portions 111a and the second non-coated portions 121a may be respectively connected to the first lead tab 115 and the second lead tab 125 and empty space corresponding to steps may also be effectively filled, the bent form thereof is not limited as illustrated in the drawing and the number of times of bending of the first and second non-coated portions 111a and 121a is also not limited thereto in embodiments of the invention.

As described above, the electrode assembly 100 may be formed by alternately stacking the first polar plates 110 including the first coating portion 112 and the bent first non-coated portion 111a and the second polar plates 120 including the second coating portion 122 and the bent second non-coated portion 121a. In other words, the electrode assembly 100 may include a stack portion 150, in which the first coating portion 112 and the second coating portion 122 are stacked, and the plurality of first non-coated portions 111a and the plurality of second non-coated portions 121a.

As illustrated in FIG. 1, the first non-coated portions 111a may be disposed at a first side of the stack portion 150 of the electrode assembly 100, and the second non-coated portions 121a may be disposed at a second side of the stack portion 150 of the electrode assembly 100. That is, the first non-coated portions 111a may be respectively bent and stacked at the first side of the stack portion 150, and the second non-coated portions 121a may be respectively bent and stacked at the second side of the stack portion 150.

The ends of the first non-coated portions 111a may be bonded to be in contact with one another, and the first lead tab 115 may be connected to the bonded ends of the first non-coated portions 111a. Likewise, the ends of the second non-coated portions 121a may be bonded to be in contact with one another, and the second lead tab 125 may be connected to bonded ends of the second non-coated portions 121a. When the electrode assembly 100 is accommodated in accommodation space of a case 200, a portion of the first lead tab 115 that is bonded to the first non-coated portions 111a and a portion of the second lead tab 125 that is bonded to the second non-coated portions 121a may be exposed outside the case 200.

The first lead tab 115 and the second lead tab 125 may be respectively connected to the first non-coated portions 111a and the second non-coated portions 121a to have different polarities. In other words, the first lead tab 115 may be connected to the first non-coated portions 111a to have a first polarity, and the second lead tab 125 may be connected to the second non-coated portions 121a to have a second polarity that is different from the first polarity. Although not illustrated in the drawings, portions of the first lead tab 115 and the second lead tab 125 that contact the case 200 may be attached with an insulation tape to increase a sealing degree with respect to the case 200 and to provide electrical insulation at the same time.

The case 200 includes accommodation space that accommodates the electrode assembly 100 and typically has a stacked structure on each of upper and lower surfaces of an aluminum thin film, and an inner surface of the case 200 is formed of a heat adhesive resin. In detail, the case 200 may have a stacked structure that is covered with a synthetic resin such as nylon, polypropylene, or polyethylene on upper and lower surfaces of an aluminum thin film, and the inner surface of the case 200 may be formed of a heat adhesive resin. Accordingly, the case 200 may be sealed as the heat adhesive resin coated on the inner surface thereof is fused by applying heat or pressure. Also, the case 200 may accommodate the electrode assembly 100 and an electrolyte solution (not shown), and may be a flexible pouch case.

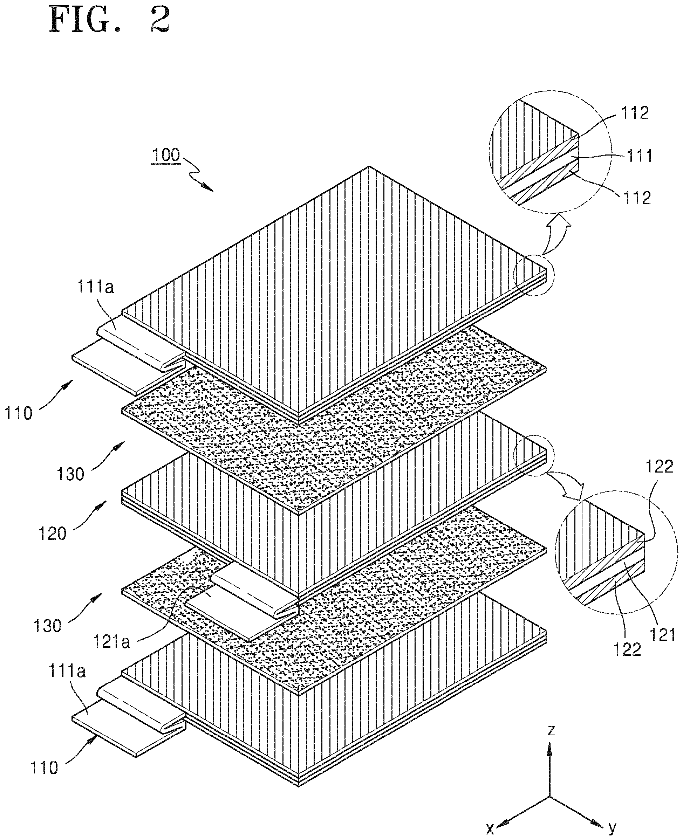

FIG. 2 is a perspective view of a portion of the disassembled electrode assembly 100 of FIG. 1. The electrode assembly 100 according to an embodiment of the present invention will be described in detail with reference to FIG. 2.

Referring to FIG. 2, the first polar plate 110 may include the first base layer 111, the first non-coated portion 111a, and the first coating portion 112. The electrode assembly 100 may include a plurality of the first polar plates 110. The first base layer 111 may be formed of a conductive metal, and in detail, of aluminum (Al). The first non-coated portion 111a may be formed by extending a portion of the first base layer 111. The first coating portion 112 may be formed by coating the first base layer 111 with a first active material (not shown). An active material according to the related art may be used as the first active material. For example, the first active material may be lithium cobalt oxide (LiCoO₂), but is not limited thereto in embodiments of the invention. Alternatively, the first active material may be a silicon-based material, a tin-based material, an aluminum-based material, or a germanium-based material. Also, the first active material may be a lithium titanium oxide (LTO).

The second polar plate 120 may include the second base layer 121, the second non-coated portion 121a, and the second coating portion 122. The electrode assembly 100 may include a plurality of the second polar plates 120. The second base layer 121 may be formed of a conductive metal, and in detail, of copper (Cu). The second non-coated portion 121a may be formed by extending a portion of the second base layer 121. The second coating portion 122 may be formed by coating the second base layer 121 with a second active material (not shown). An active material according to the related art may be used as the second active material, and the second active material may be, for example, graphite.

The separator 130 is interposed between the first polar plates 110 and the second polar plates 120. The separator 130 may be an insulating thin film having a high ion transmittivity and a high mechanical intensity. A pore diameter of the separator 130 may be from about 0.01 *µ*m to about 10 *µ*m and a thickness thereof may be from about 5 *µ*m to about 300 *µ*m, but are not limited thereto in embodiments of the invention. Examples of the separator 130 may include a sheet or nonwoven fabric formed of olefin-based polymer, glass fiber, or polyethylene. When a solid electrolyte such as polymer is used as an electrolyte, the solid electrolyte may also function as the separator 130.

The first non-coated portion 111a is a portion of the first polar plate 110 that is not coated with the first active material and may be formed by extending a portion of the first base layer 111. The second non-coated portion 121a is a portion of the second polar plate 120 that is not coated with the second active material and may be formed by extending a portion of the second base layer 121. As described above, the first non-coated portion 111a may be connected to the first lead tab 115 to have a first polarity, and the second non-coated portion 121a may be connected to the second lead tab 125 to have a second polarity that is different from the first polarity.

The first non-coated portion 111a may be disposed at the first side of the electrode assembly 100, whereas the second non-coated portion 121a may be disposed at the second side of the electrode assembly 100. In other words, referring to FIG. 2, the first non-coated portion 111a may be disposed at an end of the first polar plate 110 in a -y axis direction and the second non-coated portion 121a may be disposed at an end of the second polar plate 120 in a +y axis direction. As described above, the electrode assembly 100 may be formed by alternately stacking the first polar plates 110 and the second polar plates 120 in which the first non-coated portions 111a and the second non-coated portions 121a are respectively arranged in a staggered manner. The above-described arrangement prevents a short circuit by arranging the first non-coated portions 111a and the second non-coated portions 121a having different polarities at sufficient distances.

As described above, the electrode assembly 100 may include the plurality of first polar plates 110 and the plurality of second polar plates 120 that are alternately stacked and the separator 130 that is interposed between the first polar plates 110 and the second polar plates 120 and separates the first polar plates 110 and the second polar plates 120. Accordingly, a step may be formed between the first non-coated portions 111a that are respectively included in the plurality of first polar plates 110, by space in which the second polar plates 120 and the separator 130 are disposed. Likewise, a step may be formed between the second non-coated portions 121a that are respectively included in the plurality of second polar plates 120, by space in which the first polar plates 110 and the 130 are disposed. The first non-coated portion 111a and the second non-coated portions 121a are formed of metal and are relatively thin, and thus may be, for example, broken or cut due to the step.

To prevent the above problem, the electrode assembly 100 according to the current embodiment of the present invention may be formed by stacking the first polar plate 110 including the bent first non-coated portion 111a and the second polar plate 120 including the bent second non-coated portion 121a. Regarding the first non-coated portions 111a of FIG. 2, two separators 130 and one second polar plate 120 are interposed between every two adjacent first polar plates 110, and thus, a step corresponding to thicknesses of the two separators 130 and the one second polar plate 120 is formed between the two adjacent first polar plates 110. One first non-coated portion 111a is bent so as to fill empty space corresponding to the step, thereby remarkably minimizing damage such as breaking or cutting of the first non-coated portion 111a due to the step.

As described above, also in the case of the second non-coated portion 121a, two separators 130 and one first polar plate 110 are interposed between every two adjacent second polar plates 120, and thus, a step corresponding to thicknesses of the two separators 130 and the one first polar plate 110 is formed between the two adjacent second polar plates 120. One second non-coated portion 121a is bent so as to fill empty space corresponding to the step, thereby remarkably minimizing damage such as breaking or cutting of the second non-coated portion 121a due to the step.

In other words, in some embodiments, the first non-coated portions are bent so that the empty space between adjacent first coated portions is at least partially filed. Likewise, the second non-coated portions are bent so that the empty space between adjacent second coated portions is at least partially filed.

The first non-coated portions 111a and the second non-coated portions 121a may be bent in a 'Z' shape. The above shapes are ones in which the first non-coated portions 111a and the second non-coated portions 121a are bent at least twice and ends thereof are respectively connected to the first lead tab 115 and the second lead tab 125, and according, empty space corresponding to a step is efficiently filled. However, as long as the first non-coated portion 111a and the second non-coated portion 121a may be respectively connected to the first lead tab 115 and the second lead tab 125 and empty space corresponding to the step may also be effectively filled, the bent form thereof is not limited as illustrated in the drawings and the number of times of bending is also not limited thereto in embodiments of the invention.

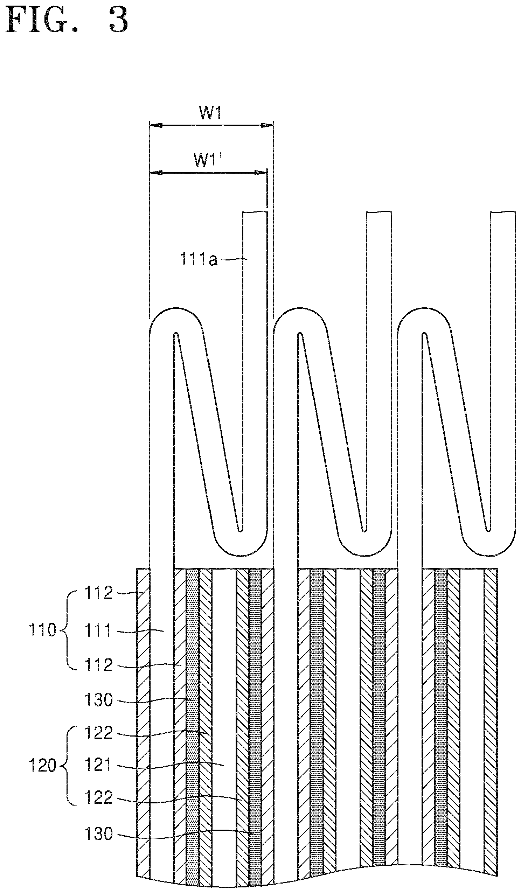

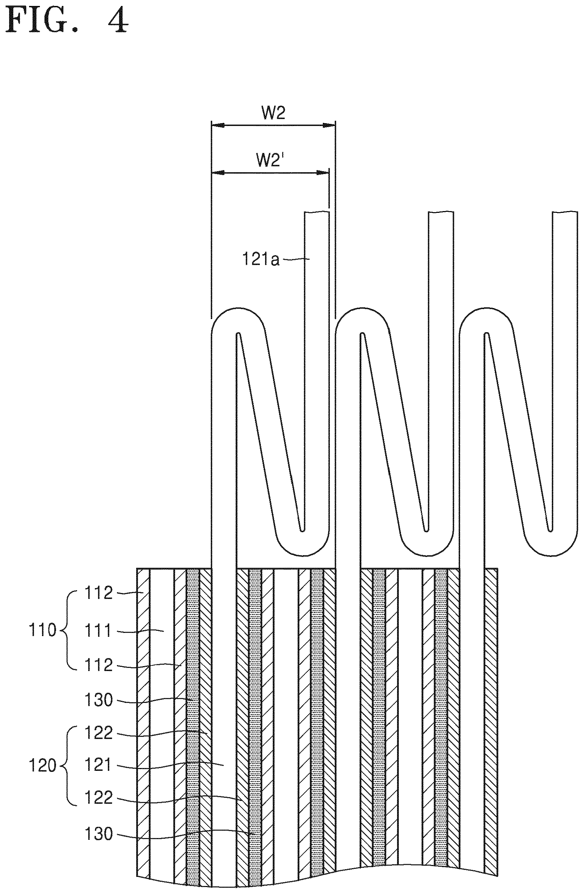

FIG. 3 is a cross-sectional view of a portion of the secondary battery 1 of FIG. 1 including the first non-coated portion 111a, cut along a line III-III'. FIG. 4 is a cross-sectional view of a portion of the secondary battery 1 of FIG. 1 including the second non-coated portion 121a, cut along a line IV-IV'.

Referring to FIG. 3, two separators 130 and one second polar plate 120 are interposed between every two adjacent first polar plates 110. Thus, a first interval W1 corresponding to thicknesses of the two separators 130 and the one second polar plate 120 interposed between the two adjacent first polar plates 110 is formed. In this case, the first non-coated portion 111a that is bent fills empty space formed by the first interval W₁. A width W₁' of the bent first non-coated portion 111a is equal to or smaller than the first interval W₁. If the width W₁' of the bent first non-coated portion 111a is greater than the first interval Wi, the first non-coated portion 111a is likely to be damaged due to tension between portions of the bent first non-coated portion 111a. Thus, it is sufficient that the width W1' of the bent first non-coated portion 111a compensates for the empty space of the first interval W1.

Likewise, referring to FIG. 4, two separators 130 and one first polar plate 110 may be interposed between every two adjacent second polar plates 120. Thus, a second interval W2 corresponding to thicknesses of the two separators 130 and the one first polar plate 110 interposed between the two adjacent first polar plates 110 is formed. In this case, the bent second non-coated portion 121a fills empty space formed by the second interval W2. A width W2' of the bent second non-coated portion 121a may be equal to or smaller than the second interval W2. If the width W2' of the bent second non-coated portion 121a is greater than the second interval W2, the second non-coated portion 121a is likely to be damaged due to tension between portions of the bent second non-coated portion 121a. Thus, it is sufficient that the width W2' of the bent second non-coated portion 121a compensates for the empty space of the second interval W2.

As described above, two separators 130 and one second polar plate 120 may be interposed between every two adjacent first polar plates 110, and two separators 130 and one first polar plate 110 may be interposed between every two adjacent second polar plates 120. Thus, the first interval W1 between the first polar plates 110 is the same as the second interval W2 between the second polar plates 120.

As the bent first non-coated portion 111a compensates for a step corresponding to the first interval W1 between the first polar plates 110 and the bent second non-coated portions 121a compensates for a step corresponding to the second interval W2 between the second polar plates 120, damage such as breaking or cutting of the first non-coated portion 111a and the second non-coated portion 121a may be prevented, thereby remarkably improving the reliability of the secondary battery 1.

As described above, according to the one or more of the above embodiments of the present invention, a secondary battery having improved durability and safety may be implemented. However, the scope of the present invention is not limited by this effect.

It should be understood that the exemplary embodiments described therein should be considered in a descriptive sense only and not for purposes of limitation. Descriptions of features or aspects within each embodiment should typically be considered as available for other similar features or aspects in other embodiments.

While one or more embodiments of the present invention have been described with reference to the figures, it will be understood by those of ordinary skill in the art that various changes in form and details may be made therein without departing from the scope of the present invention as defined by the following claims.

## Claims

1. An electrode assembly (100) comprising:
a plurality of first polar plates (110) comprising a first coated portion (112) coated with a first active material and a first non-coated portion (111a) that is bent;
a plurality of second polar plates (120) comprising a second coated portion (122) coated with a second active material and a second non-coated portion (121a) that is bent; and
a plurality of separators (130) that are interposed between the first polar plates and the second polar plates
wherein each first non-coated portion comprises:
a first extension portion that extends away from a first coated portion, a bending portion that is bent back towards the first coated portion, and a second extension portion that is bent again so as to extend away from the first coated portion, and
wherein the second extension portion of a first non-coated portion is arranged to be adjacent to the first extension portion of an adjacent first non-coated portion, and
wherein each second non-coated portion comprises:
a first extension portion that extends away from a second coated portion, a bending portion that is bent back towards the second coated portion, and a second extension portion that is bent again so as to extend away from the second coated portion, and
wherein the second extension portion of a second non-coated portion is arranged to be adjacent to the first extension portion of an adjacent second non-coated portion,
wherein the first polar plates are arranged at a first interval (W₁) and the second polar plates are arranged at a second interval (W2), wherein the first interval is equal to the second interval, and
wherein a width (W1') of the first non-coated portion that is bent is equal to or smaller than the first interval (W1), and a width (W2') of the second non-coated portion that is bent is equal to or smaller than the second interval (W2).

2. The electrode assembly of claim 1, wherein the plurality of first non-coated portions are connected to a first lead tab (115), wherein the plurality of second non-coated portions are connected to a second lead tab (125).

3. The electrode assembly of claim 1 or 2, wherein the plurality of first non-coated portions are arranged to extend from the first coated portions in a first direction, and the plurality of second non-coated portions are arranged to extend from the second coated portions in a second direction, optionally wherein the first direction is parallel to the second direction, further optionally wherein the first direction is the same as the second direction with the first non-coated portions being spaced apart from the second non-coated portions.

4. The electrode assembly of any one of claims 1 to 3, wherein the first non-coated portions are bent so that a first non-coated portion contacts an adjacent first non-coated portion, and the second non-coated portions are bent so that a second non-coated portions contacts an adjacent second non-coated portion.

5. The electrode assembly of any one of claims 1 to 4, wherein the plurality of first non-coated portions and the plurality of second non-coated portions are bent in a 'Z' shape.

6. The electrode assembly of any one of claims 1 to 5, further comprising a stack portion (150) in which the first polar plates including the first coating portion and the second polar plates including the second coating portion are alternately stacked.

7. A secondary battery (1) comprising:
an electrode assembly according to any one of claims 1 to 6; and
a case (200) accommodating the electrode assembly.

## Patentansprüche

1. Elektrodenanordnung (100), umfassend:
eine Mehrzahl von ersten Polarplatten (110), umfassend einen ersten beschichteten Abschnitt (112), der mit einem ersten Aktivmaterial beschichtet ist, und einen ersten nicht beschichteten Abschnitt (111a), der gebogen ist;
eine Mehrzahl von zweiten Polarplatten (120), umfassend einen zweiten beschichteten Abschnitt (122), der mit einem zweiten Aktivmaterial beschichtet ist, und einen zweiten nicht beschichteten Abschnitt (121a), der gebogen ist; und
eine Mehrzahl von Separatoren (130) zwischen den ersten Polarplatten und den zweiten Polarplatten,
wobei jeder erste nicht beschichtete Abschnitt Folgendes umfasst:
einen ersten Verlängerungsabschnitt, der sich von einem ersten beschichteten Abschnitt weg erstreckt, einen Biegeabschnitt, der rückwärts zum ersten beschichteten Abschnitt hin gebogen ist, und einen zweiten Verlängerungsabschnitt, der nochmal gebogen ist, sodass er sich von dem ersten beschichteten Abschnitt weg erstreckt, und
wobei der zweite Verlängerungsabschnitt eines ersten nicht beschichteten Abschnitts dazu angeordnet ist, benachbart zu dem ersten Verlängerungsabschnitt eines benachbarten ersten nicht beschichteten Abschnitts zu sein, und
wobei jeder zweite nicht beschichtete Abschnitt Folgendes umfasst:
einen ersten Verlängerungsabschnitt, der sich von einem zweiten beschichteten Abschnitt weg erstreckt, einen Biegeabschnitt, der rückwärts zum zweiten beschichteten Abschnitt hin gebogen ist, und einen zweiten Verlängerungsabschnitt, der nochmal gebogen ist, sodass er sich von dem zweiten beschichteten Abschnitt weg erstreckt, und
wobei der zweite Verlängerungsabschnitt eines zweiten nicht beschichteten Abschnitts dazu angeordnet ist, benachbart zu dem ersten Verlängerungsabschnitt eines benachbarten zweiten nicht beschichteten Abschnitts zu sein,
wobei die ersten Polarplatten in einem ersten Intervall (W1) angeordnet sind und die zweiten Polarplatten in einem zweiten Intervall (W2) angeordnet sind, wobei das erste Intervall gleichgroß wie das zweite Intervall ist, und
wobei eine Breite (W1') des ersten nicht beschichteten Abschnitts, der gebogen ist, gleichgroß wie oder kleiner als das erste Intervall (W1) ist, und eine Breite (W2') des zweiten nicht beschichteten Abschnitts, der gebogen ist, gleichgroß wie oder kleiner als das zweite Intervall (W2) ist.

2. Elektrodenanordnung nach Anspruch 1, wobei die Mehrzahl von ersten nicht beschichteten Abschnitten mit einer ersten Anschlussleiste (115) verbunden sind, wobei die Mehrzahl von zweiten nicht beschichteten Abschnitten mit einer zweiten Anschlussleiste (125) verbunden sind.

3. Elektrodenanordnung nach Anspruch 1 oder 2, wobei die Mehrzahl von ersten nicht beschichteten Abschnitten dazu angeordnet sind, sich von den ersten beschichteten Abschnitten in eine erste Richtung zu erstrecken, und die Mehrzahl von zweiten nicht beschichteten Abschnitten dazu angeordnet sind, sich von den zweiten beschichteten Abschnitten in eine zweite Richtung zu erstrecken, gegebenenfalls wobei die erste Richtung parallel zu der zweiten Richtung verläuft, ferner gegebenenfalls wobei die erste Richtung dieselbe ist wie die zweite Richtung, wobei die ersten nicht beschichteten Abschnitte von den zweiten nicht beschichteten Abschnitten beabstandet sind.

4. Elektrodenanordnung nach einem der Ansprüche 1 bis 3, wobei die ersten nicht beschichteten Abschnitte so gebogen sind, dass ein erster nicht beschichteter Abschnitt einen benachbarten ersten nicht beschichteten Abschnitt berührt, und die zweiten nicht beschichteten Abschnitte so gebogen sind, dass ein zweiter nicht beschichteter Abschnitt einen benachbarten zweiten nicht beschichteten Abschnitt berührt.

5. Elektrodenanordnung nach einem der Ansprüche 1 bis 4, wobei die Mehrzahl von ersten nicht beschichteten Abschnitten und die Mehrzahl von zweiten nicht beschichteten Abschnitten in eine Z-Form gebogen sind.

6. Elektrodenanordnung nach einem der Ansprüche 1 bis 5, ferner umfassend einen Stapelabschnitt (150), in welchen die ersten Polarplatten samt dem ersten beschichteten Abschnitt und die zweiten Polarplatten samt dem zweiten beschichteten Abschnitt abwechselnd gestapelt sind.

7. Sekundärbatterie (1), umfassend:
eine Elektrodenanordnung nach einem der Ansprüche 1 bis 6; und
ein Gehäuse (200), das die Elektrodenanordnung aufnimmt.

## Revendications

1. Ensemble d'électrodes (100) comprenant :
une pluralité de premières plaques polaires (110) comprenant une première partie recouverte (112) recouverte d'une première matière active et une première partie non recouverte (111a) qui est incurvée ;
une pluralité de secondes plaques polaires (120) comprenant une seconde partie recouverte (122) recouverte d'une seconde matière active et une seconde partie non recouverte (121a) qui est incurvée ; et
une pluralité de séparateurs (130) qui sont intercalés entre les premières plaques polaires et les secondes plaques polaires
dans lequel chaque première partie non recouverte comprend :
une première partie d'extension qui s'étend en s'éloignant d'une première partie recouverte, une partie d'incurvation qui est incurvée vers la première partie recouverte, et une seconde partie d'extension qui est à nouveau incurvée de manière à s'étendre en s'éloignant de la première partie recouverte, et
dans lequel la seconde partie d'extension d'une première partie non recouverte est agencée de façon à être adjacente à la première partie d'extension d'une première partie non recouverte adjacente, et
dans lequel chaque seconde partie non recouverte comprend :
une première partie d'extension qui s'étend en s'éloignant d'une seconde partie recouverte, une partie d'incurvation qui est incurvée vers la seconde partie recouverte, et une seconde partie d'extension qui est à nouveau incurvée de manière à s'étendre en s'éloignant de la seconde partie recouverte, et
dans lequel la seconde partie d'extension d'une seconde partie non recouverte est agencée de façon à être adjacente à la première partie d'extension d'une seconde partie non recouverte adjacente,
dans lequel les premières plaques polaires sont agencées dans un premier intervalle (W1) et les secondes plaques polaires sont agencées dans un second intervalle (W2), où le premier intervalle est égal au second intervalle, et
dans lequel une largeur (W1') de la première partie non recouverte qui est incurvée est inférieure ou égale au premier intervalle (W1), et une largeur (W2') de la seconde partie non recouverte qui est incurvée est inférieure ou égale au second intervalle (W2).

2. Ensemble d'électrodes selon la revendication 1, dans lequel la pluralité de premières parties non recouvertes sont reliées à une première patte de connexion (115), dans lequel la pluralité de secondes parties non recouvertes sont reliées à une seconde patte de connexion (125) .

3. Ensemble d'électrodes selon la revendication 1 ou 2, dans lequel la pluralité de premières parties non recouvertes sont agencées de façon à s'étendre depuis les premières parties recouvertes dans une première direction, et la pluralité de secondes parties non recouvertes sont agencées de façon à s'étendre depuis les secondes parties recouvertes dans une seconde direction, optionnellement dans lequel la première direction est parallèle à la seconde direction, en outre optionnellement dans lequel la première direction est identique à la seconde direction avec les premières parties non recouvertes espacées des secondes parties non recouvertes.

4. Ensemble d'électrodes selon l'une quelconque des revendications 1 à 3, dans lequel les premières parties non recouvertes sont incurvées de manière à ce qu'une première partie non recouverte entre en contact avec une première partie non recouverte adjacente, et les secondes parties non recouvertes sont incurvées de manière à ce qu'une seconde partie non recouverte entre en contact avec une seconde partie non recouverte adjacente.

5. Ensemble d'électrodes selon l'une quelconque des revendications 1 à 4, dans lequel la pluralité de premières parties non recouvertes et la pluralité de secondes parties non recouvertes sont incurvées pour former un « Z ».

6. Ensemble d'électrodes selon l'une quelconque des revendications 1 à 5, comprenant en outre une partie d'empilement (150) dans laquelle les premières plaques polaires incluant la première partie recouverte et les secondes plaques polaires incluant la seconde partie recouverte sont empilées en alternance.

7. Batterie secondaire (1) comprenant :
un ensemble d'électrodes selon l'une quelconque des revendications 1 à 6 ; et
un boîtier (200) logeant l'ensemble d'électrodes.
